# DEMANDE DE BREVET EUROPEEN

(11) **EP 2 607 167 A1**
(43) Date de publication de la demande: **26.06.2013**
(21) Numéro de dépôt: 12197325.9
(22) Date de dépôt: 14.12.2012
(51) Int. Cl.: B60Q 1/00

(54) **Bloc pour un projecteur ou un feu de véhicule automobile**

(30) Priorité: 19.12.2011 FR 1161895
(71) Demandeur: VALEO VISION, 93012 Bobigny Cedex (FR)
(72) Inventeur: Albou, Pierre, 75013 PARIS (FR); Puente, Jean-Claude, 93190 LIVRY GARGAN (FR)

(57) **Abrégé**

Bloc pour un projecteur ou un feu pour véhicule automobile, ce bloc comportant : un module (3a) agencé pour être disposé à l'intérieur du projecteur ou du feu, ce module comportant notamment au moins une source lumineuse (L) ; un capot (12) agencé pour fermer une ouverture (9.1) d'un boîtier du projecteur ; une attache (10) reliant le module au capot,
l'un au moins de l'attache et du capot pouvant être déformé de manière à permettre un positionnement variable entre le capot et le module.

## Description

L'invention est relative à un bloc pour un projecteur ou un feu de véhicule automobile qui comporte un boîtier dans lequel est disposé au moins un module d'origine avec source lumineuse, en particulier à LED (diode électroluminescente), le boîtier comportant une paroi périphérique solidaire d'une paroi de fond, et étant ouvert sur une face opposée à la paroi de fond, cette face du boîtier étant fermée par une glace, fixée de manière permanente non démontable. Le bloc est prévu pour le remplacement du module d'origine lorsqu'il est défaillant.

Le terme "glace" utilisé dans cette description et dans les revendications désigne d'une manière générale une paroi transparente ou translucide qui peut être en matière plastique ou en verre.

Lorsque la source lumineuse d'un module de projecteur à glace non démontable est défaillante, le remplacement et le réglage de ce module sont difficiles, avec risques d'erreurs sur les éléments de remplacement.

L'invention a pour but, surtout, de fournir un bloc avec au moins un module de remplacement, selon lequel il est possible de réparer le projecteur ou le feu de manière économique et sûre, en évitant les confusions dans les remplacements des pièces.

Selon l'invention, un bloc pour un projecteur ou un feu pour véhicule automobile, comporte :
- un module agencé pour être disposé à l'intérieur du projecteur ou du feu, ce module comportant notamment au moins une source lumineuse,
- un capot agencé pour fermer une ouverture d'un boîtier du projecteur ou du feu,
- une attache reliant le module au capot,
l'un au moins de l'attache et du capot pouvant être déformé de manière à permettre un positionnement variable entre le capot et le module.

Avantageusement, l'attache est agencée de manière à attacher, c'est-à-dire de manière à fixer de manière permanente, le module au capot.

Le capot peut être déformable et l'attache rigide. Selon une autre possibilité, l'attache est déformable et le capot est rigide. Selon encore une autre possibilité, l'attache et le capot sont déformables.

Le capot peut être réalisé dans un matériau élastiquement déformable. Le capot peut comporter des plis.

L'attache peut être une attache flexible dépliable, par exemple une attache flexible dépliable choisie parmi : un cordon élastique ; une lame flexible ; un soufflet.

Le module de remplacement peut comporter au moins un support de source lumineuse destiné à recevoir au moins une source lumineuse, notamment de type diode électroluminescente.

Avantageusement, l'attache est moulée d'une seule pièce avec le capot et le support de source lumineuse du module de remplacement.

Si on le souhaite, le module de remplacement peut comporter au moins un élément supplémentaire choisi parmi :
- un moyen de déviation optique, notamment un réflecteur, destiné à dévier de la lumière issue d'une source lumineuse lorsque cette source est disposée sur le support de source ; et/ou
- un moyen de connexion électrique, notamment une carte de circuit imprimé PCB, destiné à alimenter une source lumineuse ; et/ou
- un moyen de maintien, notamment une glissière, propre à coopérer de manière réglable en hauteur et en direction avec un moyen de réglage, notamment une rotule, fixé au boîtier du projecteur.

Le cas échéant, l'attache peut être moulée d'une seule pièce avec le capot, le support de source lumineuse et cet élément supplémentaire.

L'attache peut être moulée d'une seule pièce avec le capot et le module.

En variante, l'attache peut être un moyen d'assemblage du module sur le capot de type surmoulage, clippage, encliquetage, collage, soudage.

Le capot peut comporter un moyen d'encliquetage. Avantageusement, le capot comporte sur au moins une partie de son pourtour une rainure circulaire formant le moyen d'encliquetage.

Le module de remplacement peut comporter une glissière.

L'invention a également pour objet un projecteur ou feu pour véhicule automobile comportant un boîtier dans lequel est disposé au moins un bloc de remplacement selon l'invention, notamment à la place d'un module d'origine qui a été retiré du boîtier, le boîtier comportant une paroi, comportant notamment une portion de paroi périphérique solidaire d'une portion de paroi de fond, **caractérisé en ce que** :
- la paroi du boîtier (2) comporte au moins un contour découpé (8.1, 8.2) pour libérer une ouverture d'accès (9.1, 9.2) ayant servi au remplacement du module d'origine par le bloc de remplacement,
- et le capot du bloc de remplacement est disposé dans l'ouverture d'accès de manière à fermer cette ouverture d'accès,
le capot étant fixé à la paroi du boîtier de manière à maintenir le bloc de remplacement dans le boîtier du projecteur.

Avantageusement, le boîtier est ouvert sur la face opposée à la paroi de fond et le projecteur ou feu comporte une glace fixée de manière permanente et non démontable au boîtier et qui ferme cette face.

Selon une caractéristique de l'invention, l'ouverture est une ouverture d'accès pour le remplacement du module d'origine lorsqu'un composant, notamment une diode électroluminescente, de ce module est défaillant.

Le cas échéant, l'ouverture est agencée de manière à pouvoir extraire le module défaillant à travers cette ouverture. Par exemple, les dimensions de l'ouverture sont supérieures à celles du module d'origine.

Avantageusement, le capot est propre à fermer l'ouverture.

Par exemple, le contour du capot correspond au contour découpé de l'ouverture, c'est-à-dire que le contour du capot est identique au contour découpé de l'ouverture.

Selon une caractéristique de l'invention, le contour du capot lorsqu'il est fixé à la paroi du boîtier est sécable. Ce contour est propre à être découpé de manière à libérer de nouveau l'ouverture d'accès pour le remplacement du module de remplacement lorsqu'un composant, notamment une diode électroluminescente, de ce module est défaillant

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :
Fig. 1 est une représentation schématique, en vue de côté avec parties arrachées, d'un projecteur lumineux de véhicule automobile avec module.
Fig. 2 est une section partielle suivant la ligne II-II de Fig. 1 représentant schématiquement une fixation d'un module avec source lumineuse.
Fig. 3 est une vue partielle de dessus du boîtier de projecteur avec deux contours sécables.
Fig. 4 est une coupe verticale partielle du boîtier de projecteur lors de la mise en place d'un bloc de remplacement avec module selon l'invention.
Fig. 5 est une coupe verticale partielle semblable à Fig. 4 illustrant le boîtier avec le bloc de remplacement mis en place.
Fig. 6 est une vue schématique en perspective d'une variante du bloc de remplacement avec source lumineuse.
Fig. 7 est une vue de dessus partielle du boîtier de projecteur dans lequel a été découpé un contour sécable rectangulaire.
Fig. 8 est une vue en perspective schématique du bloc de remplacement dont la pièce de fermeture correspond au passage libéré selon Fig. 7 et
Fig. 9 est une coupe horizontale schématique partielle illustrant une variante de boîtier et de bloc de remplacement.

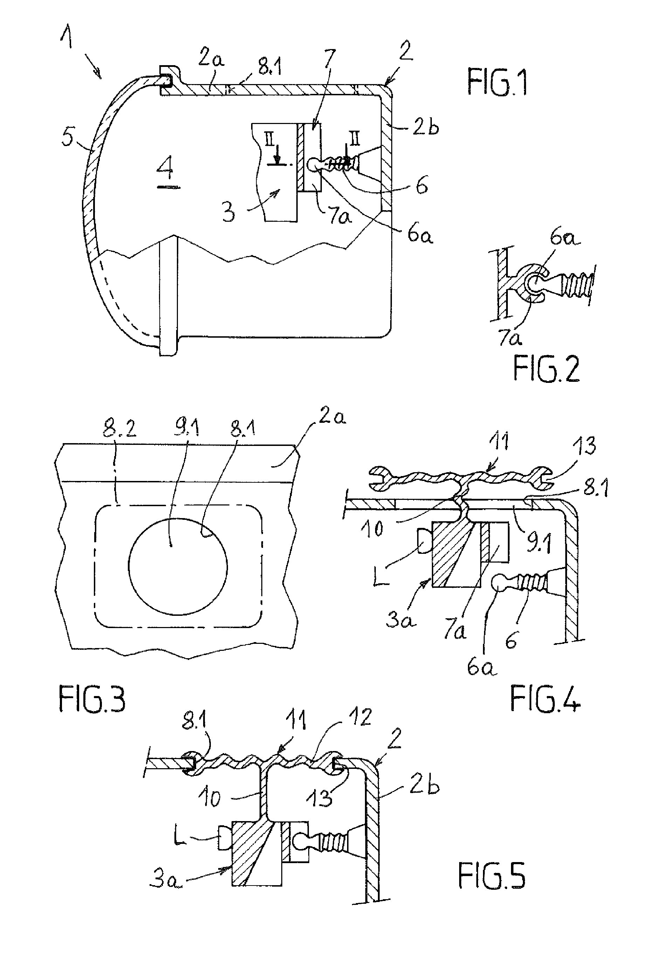

En se reportant à Fig. 1 des dessins, on peut voir, schématiquement représenté, un projecteur lumineux 1 pour véhicule automobile comportant un boîtier 2, en matière plastique moulée, dans lequel est disposé au moins un module 3 avec source lumineuse d'origine, en particulier une LED (diode électroluminescente). Le boîtier 2 comporte une paroi périphérique 2a solidaire d'une paroi de fond 2b et est ouvert sur la face 4 opposée à la paroi de fond 2b. La face 4 du boîtier est fermée par une glace 5, en matière plastique transparente ou translucide, fixée de manière permanente non démontable, en particulier par collage, au boîtier 2.

Le module 3, avec sa source lumineuse, est maintenu dans le boîtier 2 à l'aide d'un correcteur ou support 6, schématiquement représenté, qui comporte à une extrémité une rotule 6a coopérant avec une capsule du module 3. Le correcteur 6 est maintenu sur la paroi de fond 2b de manière réglable suivant la direction de l'axe du boîtier 2. La partie arrière du module 3 comporte un moyen de maintien 7 propre à coopérer de manière réglable en hauteur et en direction avec la rotule 6a. Le moyen de maintien 7 peut être réalisé sous la forme d'une glissière verticale 7a à section horizontale en C propre à recevoir la rotule 6a en exerçant un serrage élastique. Des moyens non représentés sont prévus de manière classique pour que le module 3 conserve sa position relative au boîtier 2 après réglage.

La paroi 2 du boîtier comporte, de préférence dans la partie supérieure de la paroi périphérique 2a, au moins un contour sécable 8.1 dédié au module 3 avec source lumineuse. Ce contour 8.1 est propre à être découpé pour libérer une ouverture d'accès 9.1 (Fig. 3 et 4) pour le remplacement du module 3 lorsque la LED de ce module est défaillante.

Un bloc B (Fig.4 et 5) est prévu pour ce remplacement du module. Le bloc B comporte :
- un module 3a agencé pour être disposé à l'intérieur du projecteur 1 ou du feu, ce module comportant notamment au moins une source lumineuse L,
- un capot 12 agencé pour fermer l'ouverture 9.1 du boîtier du projecteur,
- une attache 10 reliant le module au capot.

L'un au moins de l'attache 10 et du capot 12 peut être déformé de manière à permettre un positionnement variable entre le capot et le module.

Le module de remplacement 3a (Fig.4 et 5) est équipé d'une source lumineuse L constituée par une LED de mêmes caractéristiques que celle du module 3. Le module 3a est lié par l'attache 10 à une pièce de fermeture 11 dont le contour correspond au contour sécable dédié 8.1. La pièce 11 est propre à fermer l'ouverture libérée 9.1. Le profil du contour de la pièce 11 spécifique au contour dédié 8.1 permet d'éviter le montage d'un module de remplacement qui ne serait pas approprié.

Dans l'exemple illustré sur Fig. 1 à 5, le contour dédié 8.1 est circulaire. La pièce de fermeture 11 constitue le capot souple 12, notamment en matière élastomère, comportant en bordure un bourrelet dans lequel est prévue une rainure circulaire 13 formant moyen d'encliquetage et de fixation sur le bord de l'ouverture 9.

Le module de remplacement 3a comporte une glissière 7a pour le montage de ce module sur le support 6.

Le remplacement du module 3 dont la source lumineuse est défaillante est effectué de la manière suivante.

Le contour sécable 8.1 est découpé et l'ouverture d'accès 9 est libérée. Le module 3 défaillant est extrait du boîtier 2 et le module de remplacement 3a est introduit par l'ouverture 9. La pièce de fermeture 11 reste libre par rapport au boîtier 2 pour permettre, grâce à la flexibilité du capot 12 et de la liaison 10, la mise en place du module 3a sur le support 6 et son réglage. Lorsque l'installation du module 3a est terminée, la pièce de fermeture 11 peut être fixée sur le bord de l'ouverture 9 comme illustré sur Fig. 5, notamment par engagement du bord de l'ouverture dans la rainure 13.

La présence d'un élément flexible est avantageuse pour permettre l'installation et le réglage du module de remplacement 3a. Lorsque le capot 12 est souple ou flexible, la liaison 10 peut être flexible ou rigide.

La liaison 10 peut être moulée d'une seule pièce avec le capot souple 12 et le module 3a.

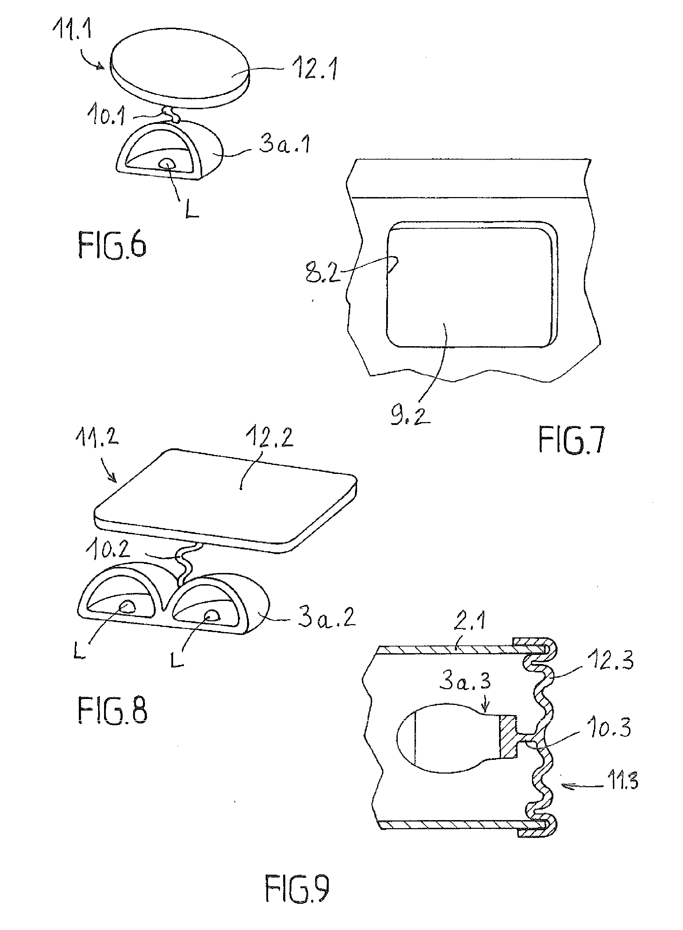

Fig. 6 illustre une variante de réalisation selon laquelle le capot 12.1 de la pièce de fermeture 11.1 est rigide. Dans ce cas, la liaison entre le capot rigide et le module de remplacement 3a.1 est assurée par un lien flexible 10.1 dépliable, qui peut être un lien élastique ou une lame élastique. Selon l'exemple de Fig. 6, le module de remplacement 3a.1 comporte un réflecteur concave et la diode L est placée à l'intérieur de ce réflecteur.

L'installation du module de remplacement 3a.1 s'effectue de la même manière que celle décrite précédemment. La flexibilité et le déploiement du lien flexible 10.1 permettent la mise en place et le réglage de la correction du module de remplacement 3a.1 alors que le capot 12.1 n'est pas fixé dans l'ouverture libérée 9.1. Après mise en place et réglage du module de remplacement 3a.1, le capot de fermeture 12.1 est installé dans l'ouverture 9.1 et y est fixé, par tout moyen approprié : encliquetage, ou collage, ou thermo-soudage.

Le projecteur 1 peut comporter plusieurs modules avec sources lumineuses différentes, en particulier pour assurer au moins deux de fonctions telles que route, code, feu diurne, feu de ville, indicateur de direction, feu de gabarit (également appelé side-marker) ou autre. Dans ce cas, la paroi périphérique 2a du boîtier comporte autant de contours sécables dédiés différents que modules différents. Sur Fig. 3, on a schématiquement représenté en traits mixtes un deuxième contour sécable 8.2 de forme rectangulaire. Pour simplifier la représentation, ce contour 8.2 entoure le premier contour 8.1. Toutefois, l'emplacement des différents contours sécables est choisi de manière à éviter des interférences entre ces contours tout en facilitant l'opération de remplacement du module auquel le contour sécable est dédié.

La forme des différents contours n'est pas limitée, bien entendu, à une forme circulaire ou rectangulaire telles que représentées sur les dessins. Cette forme peut être ovale, polygonale, sinueuse de façon à être spécifique du module à remplacer.

Les différents contours sécables 8.1, 8.2 peuvent être prévus dans des zones distinctes de la paroi périphérique 2.

Fig. 8 illustre un bloc de remplacement B avec module 3a.2 correspondant à un module d'origine auquel est dédié le contour sécable 8.2. Ce module de remplacement 3a.2 comporte, selon l'exemple représenté, deux réflecteurs concaves juxtaposés, solidaires, équipés chacun à l'intérieur d'une diode L. Le module 3a.2 est attaché par un lien flexible 10.2 à la pièce de fermeture 11.2 formée par un capot rigide 12.2 dont le contour correspond à celui du contour sécable 8.2.

En cas de défaillance d'au moins une des sources lumineuses du module d'origine correspondant au contour sécable 8.2, ce contour est découpé comme illustré sur Fig. 7 pour libérer une ouverture à contour rectangulaire 9.2. Le module défaillant peut être extrait et le module de remplacement 3a.2 est mis en place de la manière décrite précédemment, puis le capot 10.2 vient fermer l'ouverture 9.2 en étant fixé par tout moyen approprié à la paroi 2a du boîtier.

Des repères d'identification, notamment des lettres et/ou des chiffres, non représentés sur les dessins, peuvent être prévus sur les zones de la paroi 2a situées à l'intérieur des contours sécables, ainsi que sur les capots correspondants des modules de remplacement afin d'établir clairement la relation entre un contour sécable, le module d'origine auquel il correspond, et le module de remplacement.

Fig. 9 illustre une variante de réalisation selon laquelle le boîtier 2.1 d'un projecteur ou d'un feu de signalisation présente une forme cylindrique. Le fond de ce boîtier a été retiré par découpe d'un contour sécable entourant le fond. Le module de remplacement 3a.3, attaché par un lien flexible ou rigide 10.3 à la pièce de fermeture 11.3 formée par un capot souple 12.3, a été mis en place et fixé sur le fond du boîtier.

Selon l'invention, du fait que le capot de fermeture est lié au module de remplacement, le risque d'un oubli du capot, après mise en place du module de remplacement, est supprimé.

La forme du capot dédié à un type de module à remplacer détrompe la zone à découper, ce qui permet d'éviter des confusions, notamment une mise en place d'un module de remplacement qui ne correspondrait pas au module défaillant retiré.

L'invention s'applique à tous les systèmes de fixation internes de modules avec sources lumineuses, notamment glissières ou systèmes à verrouillage.

## Revendications

1. Bloc pour un projecteur (1) ou un feu pour véhicule automobile, ce bloc comportant :
- un module (3a) agencé pour être disposé à l'intérieur du projecteur ou du feu, ce module comportant notamment au moins une source lumineuse (L),
- un capot (12, 12.1, 12.2, 12.3) agencé pour fermer une ouverture (9.1, 9.2) d'un boîtier du projecteur ou du feu,
- une attache (10, 10.1, 10.2, 10.3) reliant le module au capot,
l'un au moins de l'attache et du capot pouvant être déformé de manière à permettre un positionnement variable entre le capot et le module.

2. Bloc selon la revendication précédente, **caractérisé en ce que** le capot est déformable et l'attache est rigide.

3. Bloc selon l'une des revendications précédentes, **caractérisé en ce que** l'attache (10.1, 10.2) est déformable et le capot (12.1, 12.2) est rigide.

4. Bloc selon l'une des revendications précédentes, **caractérisé en ce que** l'attache (10) et le capot (12) sont déformables.

5. Bloc selon la revendication précédente, **caractérisé en ce que** le capot (12, 12.3) est réalisé dans un matériau élastiquement déformable.

6. Bloc selon l'une des revendications précédentes, **caractérisé en ce que** le capot (12, 12.3) comporte des plis.

7. Bloc selon l'une des revendications précédentes, **caractérisé en ce que** l'attache est une attache flexible dépliable (10, 10.1, 10.2), par exemple une attache flexible dépliable choisie parmi :
- un cordon élastique,
- une lame flexible,
- un soufflet.

8. Bloc selon l'une des revendications précédentes, **caractérisé en ce que** l'attache (10, 10.1, 10.2, 10.3) est moulée d'une seule pièce avec le capot (12, 12.1, 12.2, 12.3) et le module.

9. Bloc selon l'une des revendications précédentes, **caractérisé en ce que** le capot comporte un moyen d'encliquetage (13).

10. Bloc selon la revendication précédente, **caractérisé en ce que** le capot comporte sur au moins une partie de son pourtour une rainure circulaire (13) formant le moyen d'encliquetage.

11. Bloc selon l'une des revendications précédentes, **caractérisé en ce que** le module de remplacement (3a) comporte une glissière (7a).

12. Projecteur ou feu pour véhicule automobile comportant un boîtier (2) dans lequel est disposé au moins un bloc de remplacement (B) selon l'une des revendications précédentes, notamment à la place d'un module d'origine (3) qui a été retiré du boîtier, le boîtier comportant une paroi (2), comportant notamment une portion de paroi périphérique solidaire d'une portion de paroi de fond, **caractérisé en ce que** :
- la paroi du boîtier (2) comporte au moins un contour découpé (8.1, 8.2) pour libérer une ouverture d'accès (9.1, 9.2) ayant servi au remplacement du module d'origine par le bloc de remplacement,
- et le capot (12) du bloc de remplacement est disposé dans l'ouverture d'accès de manière à fermer cette ouverture d'accès,
le capot étant fixé à la paroi du boîtier de manière à maintenir le bloc de remplacement dans le boîtier du projecteur.
